# EUROPÄISCHE PATENTANMELDUNG

(11) **EP 3 366 112 A1**
(43) Veröffentlichungstag der Anmeldung: **29.08.2018**
(21) Anmeldenummer: 18158976.3
(22) Anmeldetag: 27.02.2018
(51) Int. Cl.: A01G 9/08, A01G 7/00

(54) **VORRICHTUNG ZUR ÜBERWACHUNG VON PFLANZEN**

(30) Priorität: 28.02.2017 DE 102017203245
(71) Anmelder: Phenospex B.V., 6416 SG Heerlen (NL)
(72) Erfinder: Schwartz, Stefan, 52146 Würselen (DE); Hummel, Grégoire Martin, 6218 HL Maastricht (NL); Zhokhavets, Uladzimir, 52066 Aachen (DE)
(74) Vertreter: dompatent von Kreisler Selting Werner - Partnerschaft von Patent- und Rechtsanwälten mbB

(57) **Zusammenfassung**

Vorrichtung zur Überwachung von Pflanzen mit einem Tischelement (10) und einer Vielzahl von Wägeelementen (12), die auch in dem Tischelement angeordnet sind zur Aufnahme von Pflanzen.

## Beschreibung

Die vorliegende Erfindung betrifft eine Vorrichtung zur Überwachung von Pflanzen, insbesondere zur Überwachung der Bewässerung der Pflanzen sowie ein Verfahren zur Überwachung von Pflanzen.

Bei der Züchtung von Pflanzen ist es erforderlich eine Vielzahl von Pflanzen heranzuziehen, welche allesamt unter den gleichen Bedingungen aufwachsen und sodann die für die Zucht geeigneten Pflanzen auszuwählen. Zu diesen Bedingungen gehört auch die Bewässerung. So ist es insbesondere bei der Zucht von trockenheitsresistenten Pflanzen erforderlich eine Bewässrung und insbesondere eine exakte Mängelbewässerung durchzuführen, um so herauszufinden, ob unter diesen Stressbedingungen bestimmte Pflanzen resistent sind.

Die exakte Bewässerung erfolgt üblicherweise durch ein manuelles Abmessen und Zugeben des Wassers an die Pflanzen. Dies ist personalaufwendig und daher teuer, fehleranfällig und bietet Nachteile, da der tatsächliche Wasserverbrauch der Pflanze in diesem Verfahren beispielsweise bei unterschiedlichen Außentemperaturen nicht erfasst werden kann.

Aufgabe der vorliegenden Erfindung ist es eine Vorrichtung zu schaffen, mit der Pflanzen präzise und effizient Überwacht werden können, insbesondere deren Bewässerungszustand bzw. Wasserverbrauch.

Die Aufgabe wird gelöst durch die Vorrichtung des Anspruch 1 sowie durch das Verfahren des Anspruchs 11.

Die erfindungsgemäße Vorrichtung zur Überwachung von Pflanzen weist ein Tischelement auf. In dem Tischelement sind eine Vielzahl von Wägeelementen angeordnet zur Aufnahme von Pflanzen. Durch die Wägeelemente wird das Gewicht jeder einzelnen Pflanze präzise und reproduzierbar überwacht. So kann beispielsweise die Zugabe von Wasser in Abhängigkeit des erfassten Gewichts der jeweiligen Pflanze erfolgen. Ein vorheriges Abmessen der zu zugebenden Wassermenge ist daher nicht mehr erforderlich. Somit gestaltet sich der Bewässerungsvorgang deutlich einfacher. Auch ist durch die Erfassung des Gewicht der jeweiligen Pflanze der tatsächliche Wasserverbrauch der Pflanze erfasst und kann so in Abhängigkeit beispielsweise anderer Parameter wie Temperatur, Luftfeuchtigkeit, Sonneneinstrahlung und dergleichen ermittelt werden. Hierdurch lassen sich auf einfache Weise reproduzierbare und präzise Aussagen über jede der einzelnen Pflanzen treffen, sodass im Zuchtverfahren geeignete Pflanzen, insbesondere trockenheitsresistente Pflanzen, für die weitere Zucht ausgesucht werden können. Dabei ist es nicht erforderlich die Pflanzen zu bewegen, so dass beispielsweise vorgegebene Umweltbedingungen wie Lichteinstrahlung oder Luftzusammensetzung, konstant gehalten werden können. Insbesondere weist die Vorrichtung mindestens drei, bevorzugt mindestens vier und insbesondere mindestens acht Wägeelemente auf.

Vorzugsweise erfolgt eine kontinuierliche Überwachung. Alternativ kann ein Auslesen des Gewichts der Pflanze in vorgegebenen Zeitintervallen erfolgen.

Vorzugsweise weist das Tischelement eine Oberfläche auf, die resistent ist gegen die herrschenden Umwelteinflüsse. Insbesondere ist die Oberfläche UVstabil und wird auch nicht durch gängige Düngerbeigaben des Wassers angegriffen. Insbesondere besteht die Oberfläche aus Edelstahl oder einem inertem Kunststoff wie beispielsweise Polyurethane (PUR) oder Polyoxymethylen (POM).

Vorzugsweise weist die Vorrichtung mindestens eine Bewässerungsvorrichtung auf die mindestens einer Pflanze unmittelbar zugeordnet ist zur Bewässerung der Pflanze. Durch die Bewässerungsvorrichtung wird Wasser unmittelbar zur Pflanze gegeben. Ein manuelles Zugeben ist nicht mehr erforderlich. Insbesondere kann die Bewässerung durch die Bewässerungsvorrichtung automatisch erfolgen in Abhängigkeit des erfassten Gewichts und/oder zu bestimmten vorgegebenen Zeiten.

Vorzugsweise weist die Vorrichtung eine Vielzahl von Bewässerungsvorrichtungen auf, sodass jeder Pflanze genau eine Bewässerungsvorrichtung zugeordnet werden kann, sodass jede Pflanze individuell bewässert werden kann. Insbesondere stimmt hierbei die Anzahl der Wägeelemente mit der Anzahl der Bewässerungsvorrichtungen überein. Somit ist es möglich jede Pflanze individuell zu bewässern und hierbei präzise und effizient einzelne resistente und für die Zucht geeignete Pflanzen zu selektieren.

Vorzugsweise ist die Bewässerungsvorrichtung höhenverstellbar. Hierdurch ist sichergestellt, dass unterschiedliche Pflanzen mit unterschiedlichen Topfhöhen verwendet werden können, wobei die Bewässerungsvorrichtung jeweils an die Topfhöhe der jeweiligen Pflanze angepasst wird.

Vorzugsweise sind die Wägeelemente mit einem Wäge-Controller verbunden. Durch den Wäge-Controller können die einzelnen Wägeelemente ausgelesen werden. Dabei weist der Wäge-Controller einen Busanschluss auf zur Verbindung mit weiteren Vorrichtungen und/oder einer Auswerte- und Steuereinrichtung. Bei dem Bussystem kann es sich um jedes übliche Bussystem wie Profibus, Profinet, CAN-Bus, RS485 Bus, EIA485 Bus, RS232 Bus, EIA232 Bus und dergleichen handeln. Durch den Busanschluss ist es möglich auf einfache Weise eine Vielzahl von Vorrichtungen miteinander zu verbinden und sodann mit einer gemeinsamen Auswerte- und Steuereinrichtung zu verbinden. Hierdurch wird der Aufbau deutlich vereinfacht. Insbesondere bei großen Anlagen mit einer Vielzahl von erfindungsgemäßen Vorrichtungen wird der Aufstell- und Einrichteaufwand deutlich reduziert. Weiterhin kann die Anlage nahezu beliebig erweitert werden bei steigendem Bedarf. Bei der Auswerte- und Steuereinrichtung kann es sich beispielsweise um einen Terminal, einen Personalcomputer, eine speicherprogrammierbare Steuerung (SPS) oder dergleichen handeln. Durch die Auswerteeinrichtung ist das durch die Wägeelemente erfasste Gewicht jeder einzelnen Pflanze abrufbar. Insbesondere kann durch die Auswerte- und Steuereinrichtung die Bewässerung jeder einzelnen Pflanze individuelle in Abhängigkeit der erfassten Gewichte der jeweiligen Pflanzen steuerbar sein.

Vorzugsweise weist die Bewässerungsvorrichtung ein Steuerventil auf. Hierbei handelt es sich insbesondere um ein Magnetventil. Dabei ist das Steuerventil mit einem Bewässerungs-Controller verbunden, wobei der Bewässerungs-Controller einen Busanschluss aufweist zur Verbindung mit weiteren Vorrichtungen und/oder einer Auswerte- und Steuereinrichtung. Bei dem Bussystem kann es sich um jedes übliche Bussystem wie Profibus, Profinet, CAN-Bus, RS485 Bus, EIA485 Bus, RS232 Bus, EIA232 Bus und dergleichen handeln. Durch den Busanschluss ist es möglich auf einfache Weise eine Vielzahl von Vorrichtungen miteinander zu verbinden und sodann mit einer gemeinsamen Auswerte- und Steuereinrichtung zu verbinden. Hierdurch wird der Aufbau deutlich vereinfacht. Insbesondere bei großen Anlagen mit einer Vielzahl von erfindungsgemäßen Vorrichtungen wird der Aufstell- und Einrichteaufwand deutlich reduziert. Weiterhin kann die Anlage nahezu beliebig erweitert werden bei steigendem Bedarf. Bei der Auswerte- und Steuereinrichtung kann es sich beispielsweise um einen Terminal, einen Personalcomputer, eine speicherprogrammierbare Steuerung (SPS) oder dergleichen handeln. Durch die Steuereinrichtung ist jede Bewässerungsvorrichtung individuell steuerbar. Insbesondere kann durch die Auswerte- und Steuereinrichtung die Bewässerung jeder einzelnen Pflanze individuelle in Abhängigkeit der erfassten Gewichte der jeweiligen Pflanzen steuerbar sein. Insbesondere weist jede Bewässerungsvorrichtung ein Steuerventil auf, wobei jedes Steuerventil mit dem Bewässerungs-Controller verbunden ist. Alternativ hierzu weist die gesamte Vorrichtung lediglich ein Steuerventil auf, welches mit einem Bewässerungs-Controller verbunden ist. Insbesondere kann der Bus für den Bewässerungs-Controller separat ausgebildet sein vom Bus für den Wäge-Controller.

Vorzugsweise sind der Wäge-Controller und der Bewässerungs-Controller als gemeinsamer Controller ausgebildet. Dabei weist der gemeinsame Controller einen gemeinsamen Busanschluss auf für die Wägeelemente und die Bewässerungsvorrichtung. Somit lassen sich einzelne Vorrichtungen durch ein einzelnes Bussystem miteinander verbinden und/oder mit einer Auswerte- und Steuereinrichtung verbinden. Somit ist lediglich ein Kabel erforderlich, um einzelne Vorrichtungen miteinander zu verbinden bzw. die einzelnen Vorrichtungen mit einer Auswerte- und Steuereinrichtung. Hierdurch wird der Aufbau deutlich vereinfacht. Insbesondere bei großen Anlagen mit einer Vielzahl von erfindungsgemäßen Vorrichtungen wird der Aufstell- und Einrichteaufwand deutlich reduziert. Weiterhin kann die Anlage nahezu beliebig erweitert werden bei steigendem Bedarf.

Vorzugsweise ist der Wäge-Controller mit einem Temperatursensor verbunden zur Kompensation des Temperatureinflusses auf die Wägeelemente. Insbesondere weist jedes Wägeelement einen Temperatursensor auf, um die am Ort des Wägeelements herrschenden Temperaturverhältnisse zu berücksichtigen. Vorzugsweise ist mindestens ein und insbesondere alle Wägeelemente umgeben von einer im Tischelement angeordneten Nut. Entlang der Nut läuft überschüssiges Wasser ab und gelangt nicht an das jeweilige Wägeelement. Hierdurch ist sichergestellt, dass bei einem Überlaufen des Wassers die Elektronik des Wägeelements nicht beschädigt oder zerstört wird. Insbesondere weist die Nut einen Sammelablauf auf durch den das Wasser vollständig aus der Vorrichtung abgeführt wird.

Vorzugsweise weist mindestens ein Wägeelement eine Positionierhilfe auf zur reproduzierbaren Positionierung von Pflanzen auf dem Wägeelement. Insbesondere weisen alle Wägeelemente Positionierhilfen auf. Da eine nicht ganz zentrale Aufstellung einer Pflanze auf einem Wägeelement zu leicht abweichenden Wiegeergebnissen führen kann, ist es erforderlich die Pflanzen präzise auf das Wägeelement zu positionieren. Um die hierfür erforderliche Zeit zu minimieren, sind die Positionierhilfen vorgesehen, welche eine präzise Position vorgeben. Bei den Positionierhilfen handelt es sich insbesondere um mindestens drei senkrecht zu einer Aufstellfläche der Wägeelemente stehende Stifte. Hierdurch wird die Position auf dem Wägeelement eindeutig definiert.

Vorzugsweise weist die Bewässerungsvorrichtung eine Drossel auf, sodass der Durchfluss konstant ist. Dabei kann die Drossel unmittelbar einer bestimmten Bewässerungsvorrichtung zugeordnet sein oder im Zulauf für alle Bewässerungsvorrichtungen einer Vorrichtung angeordnet sein, um den jeweiligen Durchfluss konstant zu halten unabhängig vom vorliegenden Wasserdruck.

Darüber hinaus betrifft die Erfindung ein System aus einer Vielzahl von Vorrichtungen zur Überwachung von Pflanzen wie vorstehend beschrieben, wobei die Vorrichtungen über mindestens ein Bussystem miteinander verbunden sind.

Weiterhin betrifft die Erfindung ein Verfahren zur Überwachung und Bewässerung von Pflanzen mit einer Vorrichtung wie vorstehend beschrieben. Bei dem erfindungsgemäßen Verfahren wird das Gewicht einer Pflanze erfasst und sodann erfolgt eine Bewässerung in Abhängigkeit des erfassten Gewichts und/oder der Zeit. So kann die Bewässerung stets zur selben Tageszeit erfolgen oder in fest vorgegebenen Zeitintervallen.

Vorzugsweise wird jeweils nach einer vorgegebenen Zeit die Pflanze bewässert, bis ein vorgegebenes Gewicht erreicht wird. So kann beispielsweise eine Bewässerung erfolgen zu einer bestimmten Tageszeit. Das vorgegebene Gewicht kann dabei individuell für jede Pflanze vorgegeben werden oder für alle Pflanzen der Vorrichtung.

Vorzugsweise erfolgt eine Bewässerung der Pflanze sobald ein vorgegebener Grenzwert für das Gewicht der Pflanze unterschritten wird. Die Bewässerung erfolgt sodann bis ein vorgegebenes Gewicht der Pflanze wieder erreicht wird. Der Grenzwert kann dabei individuell für jede Pflanze vorgegeben sein oder für alle Pflanzen einer Vorrichtung gemeinsam bestimmt sein. Somit wird die Bewässerung in Abhängigkeit des erfassten Gewichts ausgelöst und auch die Dauer der Bewässerung erfolgt in Abhängigkeit des erfassten Gewichts, bis ein vorgegebenes Gewicht wieder erreicht ist. Dabei kann auch das vorgegebene Gewicht für jede Pflanze individuell vorgegeben werden oder für alle Pflanzen der Vorrichtung bestimmt werden.

Vorzugsweise erfolgt eine Bewässerung jeweils nach einer vorgegebenen Zeit. Dabei erfolgt die Bewässerung mit einer vorgegebenen Wassermenge, wobei die Wassermenge über einen Zeitraum konstant bleibt. Hierbei kann die Bewässerung beispielsweise zu festen Tageszeiten erfolgen oder nach Ablauf einer vorgegebenen Zeitspanne. Dabei kann die Wassermenge individuell für jede Pflanze vorgegeben werden oder für alle Pflanzen der Vorrichtung einheitlich gewählt werden.

Vorzugweise erfolgt die Bewässerung der Pflanze in Abhängigkeit des Gewichts einer anderen Pflanze. Hierbei kann die Bewässerung der Pflanze beispielsweise zu festen Tageszeiten bis zum Gewicht der anderen Pflanze erfolgen. Ist zu diesem Zeitpunkt der Wässerung die Pflanze schwerer als die andere Pflanze erfolgt keine Bewässerung.

Vorzugsweise wird das Verfahren über einen längeren Zeitraum betrieben, wobei die unterschiedlichen Bewässerungsarten wie vorstehend beschrieben, über jeweils einen gewissen Zeitraum erfolgen und sich miteinander abwechseln.

Nachfolgend wird die Erfindung anhang bevorzugter Ausführungsformen unter Bezugnahme auf die beigefügten Zeichnungen näher erläutert.

Es zeigen:
- Figur 1: einen schematischen Aufbau der erfindungsgemäßen Vorrichtung,
- Figur 2: eine Detailansicht der Figur 1 als Schnittansicht,
- Figuren 3-6: unterschiedliche Bewässerungsarten gemäß dem erfindungsgenmäßen Verfahren und
- Figur 7: eine weitere Ausführungsform gemäß des erfindungsgemäßen Verfahrens.

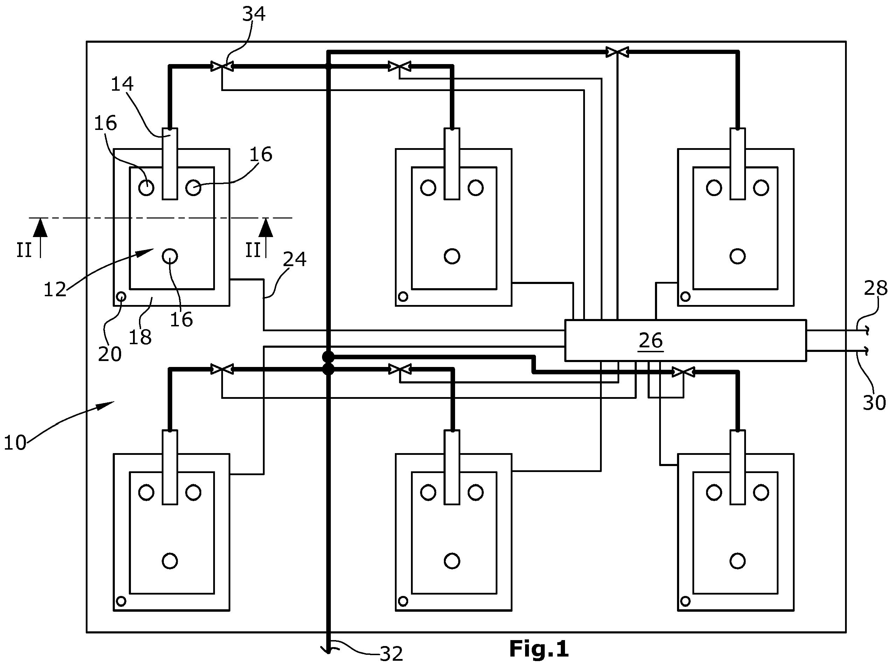

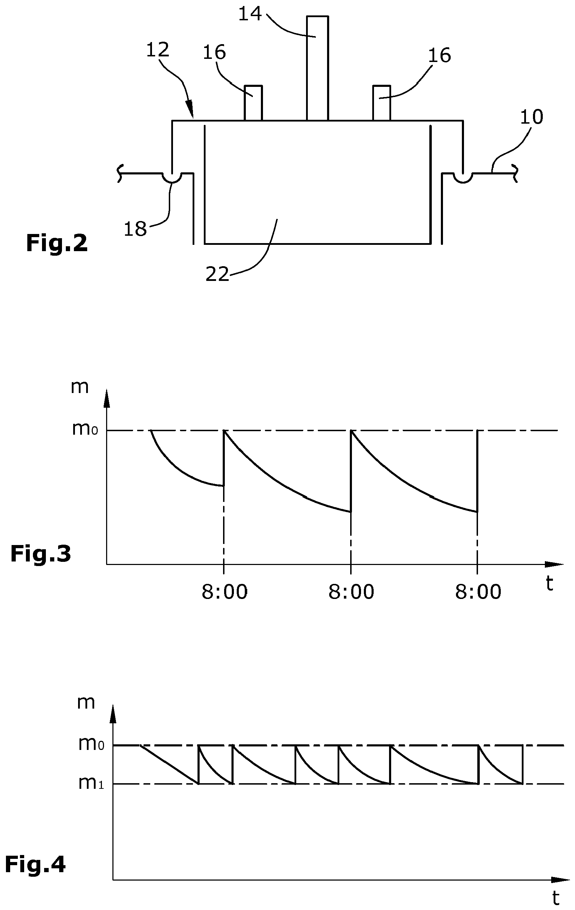

Die erfindungsgemäße Vorrichtung der Figur 1 weist ein Tischelement 10 auf. In dem Tischelement sind sechs Wägeelemente 12 angeordnet. Auf dem jeweiligen Wägeelement 12 lässt sich jeweils eine Pflanze positionieren. Hierzu weisen die Wägeelemente Positionierstifte 16 auf, durch die die Pflanzen präzise und reproduzierbar auf dem Wägeelemente positioniert werden können. Dabei sind Wägeelemente 12 von einer umlaufenden Nut 18 umgeben, durch die überschüssiges Wasser ablaufen kann. Hierzu weist die Nut 18 einen Ablauf 20 auf, durch den das überschüssige Wasser aus der Vorrichtung geleitet werden kann. Wie insbesondere aus der Figur 2 ersichtlich, wird durch die Nut 18 sichergestellt, dass überschüssiges Wasser nicht an die Elektronik 22 des Wägeelements 12 gelangen kann.

Das Wägeelement 12 ist über eine elektrische Leitung 24 mit einem Controller 26 verbunden. Der Controller 26 weist einen ersten Busanschluss 28 auf zur Verbindung mit weiteren Vorrichtungen gemäß der Figur 1 sowie einen zweiten Busanschluss 30 zur Verbindung mit einer Steuerungs- und Auswerteeinrichtung. Dabei kann alternativ hierzu am ersten Busanschluss 28 auch ein Abschlusswiderstand vorgesehen sein, sofern keine weiteren Vorrichtungen gemäß der Figur 1 vorgesehen sind. Über den Controller 26 kann das Gewicht der jeweiligen Pflanze durch das Wägeelement ermittelt werden. Hierdurch erfolgt eine präzise Überwachung der jeweiligen Pflanze. Insbesondere bei der Bewässerung kann das Gewicht herangezogen werden für die Menge an zugegebenem Wasser.

Weiterhin weist die Vorrichtung der Figur 1 Bewässerungsvorrichtungen 14 auf. Dabei ist jedem Wägeelement 12 genau eine Bewässerungsvorrichtung zugeordnet. Somit weist jede Pflanze ihre individuelle Bewässerungsvorrichtung 14 auf. Die Bewässerungsvorrichtung 14 ist dabei mit einem Wasseranschluss 32 verbunden. Zwischen Wasseranschluss 32 und Bewässerungsvorrichtung 14 ist jeweils ein Steuerventil 34 angeordnet. Durch das Steuerventil 34 lässt sich die Bewässerung der Pflanze mittels der Bewässerungsvorrichtung 14 steuern. Hierzu ist das Steuerventil 34 ebenfalls mit dem Controller 26 verbunden. Der Controller 26 ist somit als gemeinsamer Controller sowohl für die Wägeelemente 12 als auch für die Bewässerungsvorrichtungen 14 ausgebildet. Somit kann durch den Controller eine Bewässerung der jeweiligen Pflanze individuell in Abhängigkeit einer Zeit und/oder in Abhängigkeit des erfassten Gewichts der Pflanze erfolgen.

Figur 3 zeigt eine Bewässerungsart der vorliegenden Erfindung gemäß dem erfindungsgemäßen Verfahren. Dabei ist die durch das Wägeelement 12 erfasste Masse m abgetragen über die Zeit. Gemäß der Figur 3 erfolgt eine Bewässerung der jeweiligen Pflanze jeweils zur selben Tageszeit. In diesem Beispiels 8:00 Uhr morgens. Dabei erfolgt die Bewässerung der Pflanze so lange bis ein vorgegebenes Gewicht m₀ erreicht wird. Dies erfolgt unabhängig vom Gewicht der Pflanze zum Beginn der Bewässerung. So ist beispielsweise in der Figur 3 dargestellt, dass zum Zeitpunkt der ersten Bewässerung das Gewicht der Pflanze höher ist als zum Zeitpunkt der zweiten Bewässerung.

In der Bewässerungsart gezeigt in der Figur 4 wird wiederum die Masse der jeweiligen Pflanze abgetragen über die Zeit. Dabei ist ein Grenzwert m₁ definiert. Sobald der Grenzwert m₁ der Masse der Pflanze erreicht oder unterschritten wird, erfolgt eine Bewässerung unabhängig von der Tageszeit oder einer vorgegebenen Zeitdauer. Die Bewässerung erfolgt sodann so lange bis durch die Pflanze ein vorgegebenes Gewicht m₀ wieder erreicht wird. Wie in Figur 4 dargestellt, kann die Dauer bis der Grenzwert m₁ erreicht wird unterschiedlich sein. Bei dem Grenzwert m₁ kann es dabei um eine absoluten Schwellwert handeln oder alternativ hierzu kann sich der Grenzwert m₁ aus einem Parameter C berechnen mit m₁ = C * m₀, wobei 0 < C < 1.

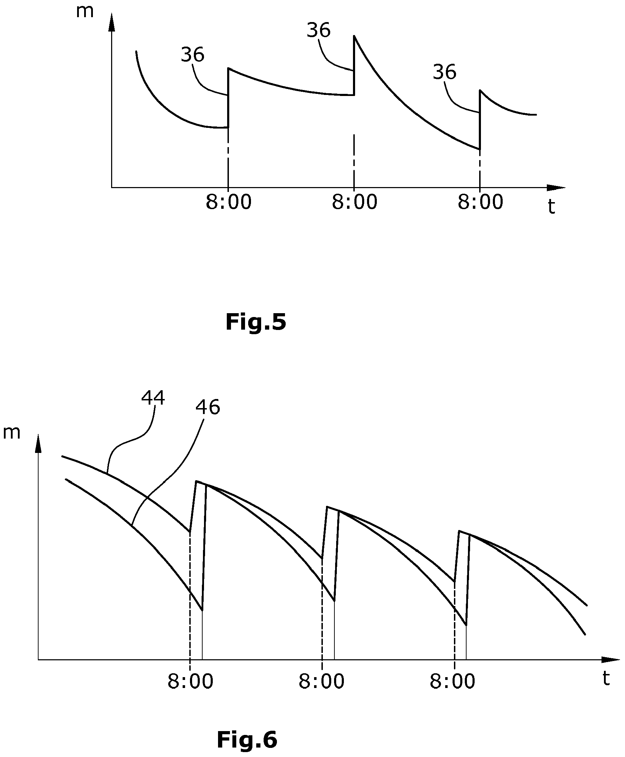

In einer weiteren Bewässerungsart, gezeigt in der Figur 5, ist wiederum die Masse m einer Pflanze über die Zeit t abgetragen. Hierbei erfolgt eine Bewässerung der Pflanze nach einer vorgegebenen Zeit. Im Beispiel der Figur 5 handelt es sich hierbei um die Tageszeit 8:00 Uhr morgens. Jeweils um 8:00 Uhr morgens erfolgt eine Bewässerung der Pflanze mit einer vorgegebenen Wassermenge. Hierdurch ist die Länge der Senkrechten 36 der Figur 5 gleich lang. Hierbei wird die Wassermenge zugeführt unabhängig vom Gewicht der Pflanze beim Beginn der Bewässerung.

In einer weiteren Bewässerungsart, gezeigt in Figur 6, ist die Masse m einer ersten Pflanze 44 über die Zeit t abgetragen. Hierbei erfolgt eine Bewässerung der ersten Pflanze zu einer vorgegebenen Tageszeit. Im Beispiel der Figur 6 handelt es sich hierbei um die Tageszeit 8:00 Uhr morgens. Jeweils um 8:00 morgen erfolgt eine Bewässerung der ersten Pflanze 44. Weiterhin ist in der Figur 6 die Masse m einer zweiten Pflanze 46 ebenfalls über die Zeit t abgetragen. Dabei erfolgt die Bewässerung der zweiten Pflanze 46 zu einer anderen Tageszeit als die Bewässerung der ersten Pflanze 44. Die Bewässerung der zweiten Pflanze 46 erfolgt dabei so lange, bis diese das Gewicht der ersten Pflanze 44 erreicht hat. Liegt jedoch das Gewicht der zweiten Pflanze 46 zum Zeitpunkt der Bewässerung der zweiten Pflanze 46 bereits über dem Gewicht der ersten Pflanze 44, so erfolgt keine Bewässerung der zweiten Pflanze 46.

Während in den Figuren 3 und 4 optimal Bewässerungen für eine Pflanze sichergestellt werden, kann durch die Bewässerung der Figuren 5 und 6 eine Mangelbewässerung, also Trockenheit, simuliert werden und sodann das Verhalten der Pflanze auf diese simulierte Trockenheit untersucht werden. Insbesondere können hierdurch trockenheitsresistente Pflanzen selektiert werden.

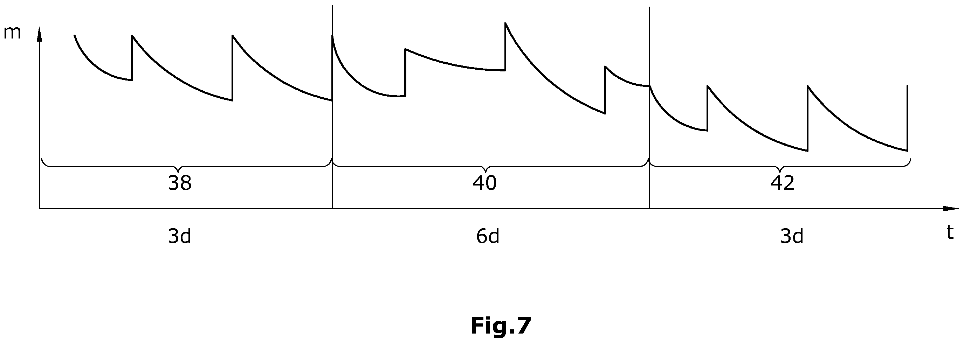

Vorzugsweise werden die oben beschriebenen Bewässerungsarten der Figuren 3 - 6 über einen langen Zeitraum durchgeführt. Dabei können sich die einzelnen Bewässerungsarten abwechseln, wie in Figur 7 gezeigt. In Figur 7 ist wiederum die Masse m der Pflanze über die Zeit t abgetragen. In einem ersten Bereich 38 erfolgt eine Bewässerung gemäß der Figur 3. In dem folgenden Zeitraum 40 erfolgt eine Mangelbewässerung gemäß der Figur 4 und sodann erfolgt in einem weiteren Zeitraum 42 wiederum eine Bewässerung gemäß der Figur 3. Dabei kann der erste Zeitraum 38 beispielsweise drei Tage betragen, der zweite Zeitraum 40 beispielsweise sechs Tage und der dritte Zeitraum 42 beispielsweise drei Tage.

Somit ist auf exakte und reproduzierbare Weise die Bewässerung der Pflanze steuerbar. Insbesondere ist es möglich die Pflanzen präzise und effizient überwachen zu können, ohne hierbei auf teures Personal zurückgreifen zu müssen.

## Patentansprüche

1. Vorrichtung zur Überwachung von Pflanzen, mit
einem Tischelement (10) und
einer Vielzahl vom Wägeelementen (12), die in dem Tischelement (10) angeordnet sind zur Aufnahme von Pflanzen.

2. Vorrichtung nach Anspruch 1, **gekennzeichnet durch** mindestens eine Bewässerungsvorrichtung (14), die mindestens einer Pflanze zugeordnet ist zur Bewässerung der Pflanze.

3. Vorrichtung nach Anspruch 1 oder 2, **dadurch gekennzeichnet, dass** die Bewässerungsvorrichtung (14) höhenverstellbar ist.

4. Vorrichtung nach einem der Ansprüche 1 bis 3, **dadurch gekennzeichnet, dass** die Wägeelemente (12) mit einem Wäge-Controller (26) verbunden sind, wobei der Wäge-Controller (26) einen Busanschluss (28, 30) aufweist zur Verbindung mit weiteren Vorrichtungen und/oder einer Auswerte- und Steuereinrichtung.

5. Vorrichtung nach einem der Ansprüche 1 bis 4, **dadurch gekennzeichnet, dass** die Bewässerungsvorrichtung (14) ein Steuerventil (34) aufweist, wobei das Steuerventil (34) mit einem Bewässerungs-Controller (26) verbunden ist, wobei der Bewässerungs-Controller (26) einen Busanschluss (28, 30) aufweist zur Verbindung mit weiteren Vorrichtungen und/oder einer Auswerte- und Steuereinrichtung.

6. Vorrichtung nach Anspruch 4 oder 5, **dadurch gekennzeichnet, dass** Wäge-Controller und Bewässerungs-Controller als gemeinsamer Controller (26) ausgebildet sind, wobei der gemeinsamer Controller (26) einen gemeinsamen Busanschluss (28, 30) aufweist für die Wägeelemente (12) und die Bewässerungsvorrichtungen (14).

7. Vorrichtung nach einem der Ansprüche 1 bis 6, **dadurch gekennzeichnet, dass** der Wäge-Controller (26) mit einem Temperaursensor verbunden ist zur Kompensation der Temperatureinflüsse auf die Wägeelemente.

8. Vorrichtung nach einem der Ansprüche 1 bis 7, **dadurch gekennzeichnet, dass** mindestens ein und insbesondere alle Wägeelemente (12) umgeben sind von einer im Tischelement (10) angeordneten Nut (18), so dass überschüssiges Wasser entlang der Nut (18) abläuft und nicht an das jeweilige Wägeelement (12) gelangt.

9. Vorrichtung nach einem der Ansprüche 1 bis 8, **dadurch gekennzeichnet, dass** mindestens ein und insbesondere alle Wägeelemente (12) eine Positionierhilfe (16) aufweisen, zur reproduzierbaren Positionierung von Pflanzen auf dem Wägeelement (12).

10. Vorrichtung nach einem der Ansprüche 2 bis 9, **dadurch gekennzeichnet, dass** die Bewässerungsvorrichtung (14) eine Drossel aufweist, so dass der Durchfluss konstant ist.

11. Verfahren zur Überwachung und Bewässerung von Pflanzen mit einer Vorrichtung nach einem der Ansprüche 1 bis 10, bei welchem das Gewicht einer Pflanze erfasst wird und eine Bewässerung erfolgt in Abhängigkeit des erfassten Gewichts und/oder der Zeit.

12. Verfahren nach Anspruch 11, bei welchem jeweils nach einer vorgegebenen Zeit die Pflanze bewässert wird, bis ein vorgegebenes Gewicht erreicht wird.

13. Verfahren nach Anspruch 11 oder 12, bei welchem jeweils bei Unterschreiten eines vorgegebenen Grenzwerts die Pflanze bewässert wird, bis ein vorgegebenes Gewicht erreicht wird.

14. Verfahren nach einem der Ansprüche 11 bis 13, bei welchem jeweils nach einer vorgegebenen Zeit die Pflanze bewässert wird mit einer vorgegebenen Wassermenge, wobei die Wassermenge über einen Zeitraum konstant bleibt.

15. Verfahren nach einem der Ansprüche 11 bis 14, bei welchem die Pflanze bewässert wird in Abhängigkeit vom Gewicht einer anderen Pflanze.
